# EUROPÄISCHE PATENTSCHRIFT

(11) **EP 0 469 400 B1**
(45) Veröffentlichungstag und Bekanntmachung des Hinweises auf die Patenterteilung: **10.11.1993**
(21) Anmeldenummer: 91112017.8
(22) Anmeldetag: 18.07.1991
(51) Int. Cl.: B67D 5/02

(54) **Einrichtung zum Sammeln einer Flüssigkeit**
Device for collecting liquids
Dispositif pour la récupération de liquides

(30) Priorität: 21.07.1990 DE 9010861 U; 08.03.1991 DE 9102774 U
(43) Veröffentlichungstag der Anmeldung: 05.02.1992
(73) Patentinhaber: Curati, Roberto, D-63225 Langen (DE)
(72) Erfinder: Curati, Roberto, D-63225 Langen (DE)
(74) Vertreter: Jochem, Bernd, Dipl.-Wirtsch.-Ing.

(56) Entgegenhaltungen:
- EP-A- 0 294 719
- DE-U- 8 429 005
- US-A- 4 905 963

## Beschreibung

Die Erfindung betrifft eine Einrichtung zum Sammeln einer Flüssigkeit und soll es ermöglichen, diese Flüssigkeit möglichst sortenrein zu sammeln und anschließend zu entsorgen oder zu recyceln. Aus dem deutschen Gebrauchsmuster 84 29 005.6 ist eine derartige Einrichtung bekannt, die einen Entnanmebehälter zur vorübergehenden Aufnahme der Flüssigkeit und zum Transport zu einem und Übergabe an diesen Sammelbehälter aufweist. Zur Übergabe der Flüssigkeit werden die beiden Behälter vorübergehend mittels einer Kupplungsvorrichtung miteinander verbunden, wobei jeweils ein kuppelbares Teil in jedem Behälter angeordnet ist, welches ihn im nicht gekuppelten Zustand verschließt. Jeder Behälter kann nur beim beabsichtigten gekuppelten Zusammenwirken der Teile mit der vorbestimmten Flüssigkeit gefüllt bzw. entleert werden.

Die bekannte Einrichtung ist recht umständlich zu handhaben, da die Auslaßöffnung des Entnahmebehälters oben angeordnet ist und er also zum Entleeren umgedreht werden muß. Außerdem weist sie einen Spezialverschluß auf und ist daher verhältnismäßig teuer in der Herstellung.

Die Einrichtung gemäß der Erfindung ist demgegenüber einfach in der Handhabung, da die mit einem Schlauch verbundene Einlaßöffnung des Entnahmebehälters oben an diesem und die Auslaßöffnung in seinem Boden angeordnet ist. Die Füße des Entnahmebehälters erlauben es, ihn überall abzustellen und schützen den Schnellkupplungsteil vor Verunreinigung. Zum Entleeren des Entnahmebehälters in den Sammelbehälter wird dieser einfach auf letzteren bezw. ein Verbindungselement gestellt, der Schnellverschluß wird gekuppelt und die gesammelte Flüssigkeit läuft in den Sammelbehälter, aus welchem durch eine separate Entlüftungsvorrichtung die verdrängte Luft entweichen kann.

Vorteilhafte Ausgestaltungen lassen sich den Unteransprüchen entnehmen und werden im folgenden anhand des in der Zeichnung dargestellten Ausführungsbeispiels erläutert.

Es zeigen
- Fig. 1: perspektivisch vier Entnahmebehälter, die über das Verbindungselement an den Sammelbehälter angeschlossen sind,
- Fig. 2: einen Entnahmebehälter von der Seite und
- Fig. 3: einen einzelnen Entnahmebehälter in mit dem Sammelbehälter gekuppeltem Zustand

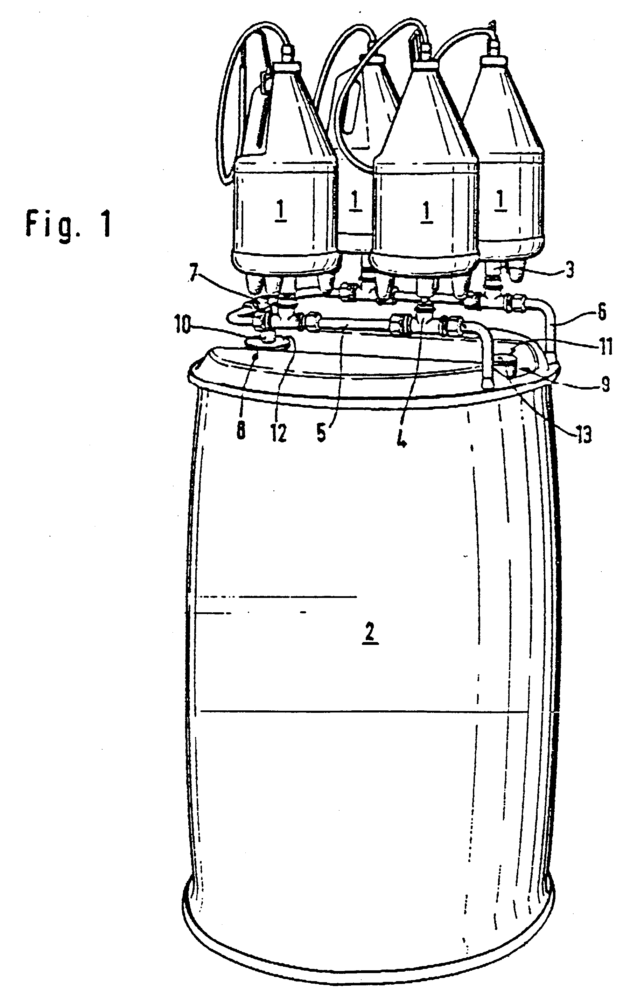

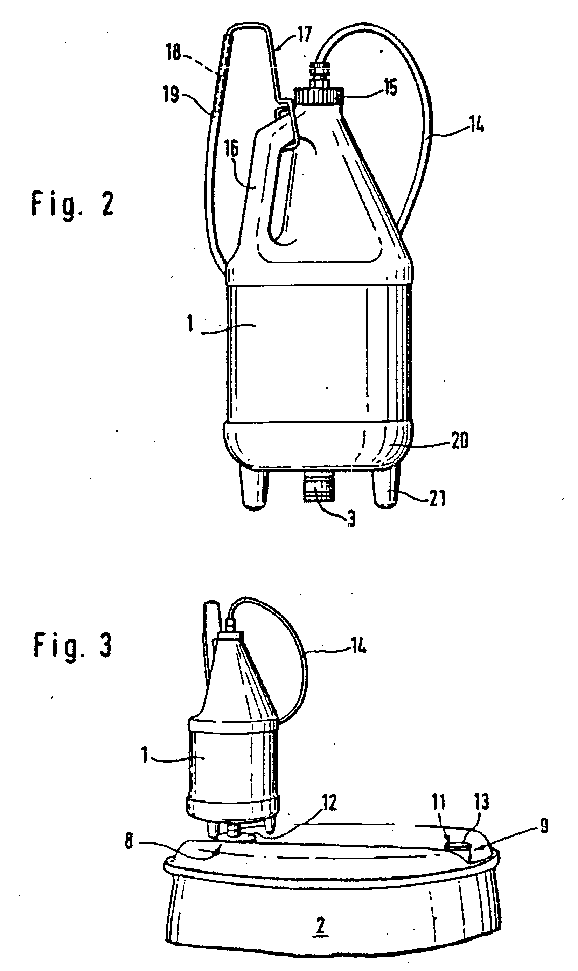

In allen Figuren sind gleiche Teile mit denselben Bezugsziffern versehen. Man erkennt in Fig. 1 die kleineren Entnahmebehälter 1, die ein Fassungsvermögen von je etwa vier Litern haben, und den größeren als Faß ausgebildeten Sammelbehälter 2, der in unterschiedlicher Größe je nach Bedarf lieferbar ist. Mögliche Größen sind etwa 120 und 220 Liter Fassungsvermögen. Die Entnahmebehälter 1 werden unten anhand von Fig. 2 detailliert beschrieben.

Jeder der Entnähmebehälter 1 ist unten mit einem Schnellkupplungsteil 3 ausgerüstet, der in Fig. 1 mit dem Einlaßschnellkupplungsteil 4 des Verbindugselementes 5 gekuppelt ist. Das gezeigte Verbindungselement 5 weist vier derartige Einlaßschnellkupplungsteile 4 auf, die nach oben zeigen. Es weist darüberhinaus im wesentlichen U-Form auf und ist mit Füßen 6 und einem Auslaßschnellkupplungsteil 7 ausgerüstet. Alle Schnellkupplungen beinhalten Ventile, die normalerweise geschlossen und nur bei paarweiser Kupplung eines Einlaß- mit einem Auslaßschnell-Verschluß geöffnet sind. Die Füße 6 des Verbindungselementes 5 sind entweder massiv ausgeführt, so daß keine Flüssigkeit hineinlaufen kann, oder so lang, daß ein Gefälle zum Auslaßschnellkupplungsteil 7 hin entsteht und daher keine Flüssigkeit in die sonst einen Sack-Kanal bildenden Füße 6 hineingelangt. Die Füße stützen sich auf dem Sammelbehälter 2 ab. Selbstverständlich sind auch andere Ausführungen des Verbindungsselementes 5 denkbar, die zwei, drei, fünf, sechs oder mehr Einlaßschnellkupplungsteile 4 aufweisen und ensprewchend viele Entnahmebehälter 2 verbinden.

Als Sammelbehälter dient ein Faß, das zwei Spundlöcher 8, 9 aufweist. Im größeren Spundloch 8 ist der Einlaßschnellkupplungsteil 10 angeordnet, der einen Einlaßventilmechanismuß beinhaltet und so sicherstellt, daß nur bei Anschluß des passenden, richtigen Entnahmebehählters 1 bezw. Verbindungselementes 5 mit der passenden Auslaßschnellkupplung 3, 7 ein Flüssigkeitseinlaß erfolgt. Im kleinen Spundloch 9 ist eine automatisch funktionierende Entlüftungsvorrichtung 11 zu erkennen, die nur bei Befüllen des Sammelbehälters 2 Luft austreten läßt und das Eindringen von Verunreinigungen sonst verhindert. Dies ist vor allem beim Sammeln von hygroskopischer Flüssigkeit wichtig, da solche bei Dauerbelüftung viel Wasser aufnehmen könnte.

Sowohl der Schnellkupplungsteil 10 als auch die Entlüftungsvorrichtung 11 sind lösbar etwa dich Einschrauben in den Spundlöchern 8 und 9 befestigt. Diese Maßnahme macht es möglich, beim Abliefern der gesammelten Flüssigkeit an ein Entsorgungsunternehmen die Entlüftungsvorrichtung 11 und den Einlaßschnellkupplungsteil 10 aus dem vollen Sammelbehälter 2 zu entfernen und in einen leeren einzusetzen. Die Spundlöcher 8 und 9 werden für den Abtransport mit gewöhnlichen preiswerten Schraubdeckeln verschlossen. Um Mißbrauch und versehentliches Öffnen der Spundlöcher 8 und 9 zu verhindern, sieht eine Weiterbildung der Erfindung vor, daß die Befestigungen mit Siegelkappen 12 und 13 gesichert werden. In einfacher Weise sind die Schnellkupplungsteile 3, 4, 7 und 10 in einer Normgröße ausgeführt und weisen eine Abmessung auf, die üblicherweise in Werkstätten nicht verwendet wird. So kann ausgeschlossen werden, daß irrtümlich etwa Altöl des Motors mit Altbremsflüssigkeit vermischt wird.

Fig. 2 zeigt einen einzelnen Entnahmebehälter 1, an dessen oberer Einfüllöffnung ein Schlauch 14 befestigt ist. Die Befestigungsverschraubung 15 ist versiegelt bezw. entsprechend gesichert, so daß sie nicht entfernt werden kann. Im oberen Drittel ist der Entnahmebehälter 1 teilweise als seitlicher Griff 16 ausgebildet, an dem er gut festzuhalten bezw. zu transportieren ist.

Oben am Griff 16 ist eine als Drahtbügel ausgeführte Vorrichtung 17 befestigt, die einerseits zum Aufhängen des Entnahmebehälters 1 an einer Wand oder einem Kraftfahrzeugteil und andererseits als Halterung 18 für das im unbenutzten Zustand freie Schlauchende 19 dient. Das Schlauchende 19 wird hierbei einfach auf den im Querschnitt kreisförmigen Drahtbügel aufgesteckt.

Unten ist auf den Behälter 1, der ebenso wie der Sammelbehälter aus halbdurchsichtigem Material hergestellt ist, um den Flüssigkeitsstand im Behälter 1, 2 jederzeit von außen ablesen zu können, eine aus Kunststoff gefertigte Schale 20 mit angegossenen Füßen 21 aufgesetzt und mit Hilfe des Auslaßschnellkupplungsteils 3 an ihm befestigt. Im gezeigten Beispiel sind drei Füße 21 vorgesehen, die einen kippsicheren Stand gewährleisten. Die Abmessungen der Füße 21 und des Schnelkupplungsteils 3 sind so aufeinander abgestimmt, daß beim Abstellen des Behälters 1 auf den Boden der Schnelkupplungsteil 3 nicht mit diesem und Schmutz in Kontakt kommt.

In Fig. 3 ist ein einzelner Entnahmebehälter 1 gezeigt, dessen Auslaßschnellkupplungsteil 3 direkt mit dem Einlaßschnellkupplungsteil 10 des Sammelbehälters 2 gekuppelt ist. Dies ist möglich, jedoch ist die in Fig. 1 dargestellte Variante mit vier Etnahmebehältern 1 für die allermeisten Anwender (Werkstätten) zweckmäßiger. Alle Schnellkupplungsteile 3, 4, 10 und 7 haben jedoch dieselben Abmessungen.

Durch die Erfindung ist es in besonders einfacher Weise möglich, den gesetzlichen Bestimmungen zum sortenreinen Sammeln und Wiederaufarbeiten von Altflüssigkeiten nachzukommen. Die Werkstattabläufe werden nicht verändert.

## Patentansprüche

1. Einrichtung zum Sammeln einer Flüssigkeit, insbesondere zum Sammeln von Altöl, verbrauchter Bremsflüssigkeit und dgl. aus Kraftfahrzeugen, bestehend aus mindestens zwei über eine Schnellkupplung (3, 4, 7, 10) miteinander verbindbaren Behältern (1, 2), von denen mindestens einer als Entnahmebehälter (1) dient, der mit einer oben angeordneten Einfüllöffnung, an der ein Schlauch (14) befestigt ist, mit einer in seinem Boden angeordneten Auslaßöffnung, die von dem Auslaßteil (3) der Schnellkupplung gebildet ist und ein in gekuppeltem Zustand offenes, sonst geschlossenes Auslaßventil aufweist, und mit Füßen (21), die beim Abstellen des Entnahmebehälters (1) den Schnellkupplungsteil (3) vor Verschmutzung schützen, ausgerüstet ist, und von denen der andere als Sammelbehälter (2) dient, der mit einer Einfüllöffnung, die von dem zweiten, (Einlaß-)teil (10) der Schnellkupplung gebildet ist und ein im gekuppelten Zustand offenes, sonst geschlossenes Einlaßventil aufweist, einer separaten Entlüftungsvorrichtung (11) und ggf. (bei mehr als einem Entnahmebehälter) mit einem Verbindungselement (5) ausgerüstet ist.

2. Einrichtung nach Anspruch 1, **dadurch gekennzeichnet,** daß der Sammelbehälter (2) ein Faß mit zwei Spundlöchern (8, 9) ist.

3. Einrichtung nach Anspruch 2, dadurch gekennzeichnet, daß sowohl der Einlaßschnellkupplungsteil (10) als auch die Entlüftungsvorrichtung (11) lösbar in den Spundlöchern befestigt sind.

4. Einrichtung nach Anspruch 3, dadurch gekennzeichnet, daß sowohl der Einlaßschnellkupplungsteil (10) als auch die Entlüftungsvorrichtung (11) mittels Siegelkappen (12, 13) nach ihrer Befestigung gesichert sind.

5. Einrichtung nach Anspruch 2, dadurch gekennzeichnet, daß an einem Griff (16) des Entnahmebehälters (1) eine Vorrichtung (17) zum Einhängen des Entnahmebehälters (1) - beispielsweis an einer Wand oder einem Teil eines Kraftfahrzeuges - angebracht ist.

6. Einrichtung nach Anspruch 5, dadurch gekennzeichnet, daß die Vorrichtung (17) gleichzeitig als Halterung (18) für das im unbenutzten Zustand freie Schlauchende (19) dient.

7. Einrichtung nach einem der Ansprüche 1 bis 6, dadurch gekennzeichnet, daß die Vorrichtung (17) ein Drahtbügel ist.

8. Einrichtung nach einem der Ansprüche 1 bis 7, dadurch gekennzeichnet, daß die Behälter (1, 2) aus halbdurchsichtigem Material hergestellt sind.

9. Einrichtung nach Anspruch 1, dadurch gekennzeichnet, daß das Verbindungselement (5) ein im wesentlichen U-förmiges Rohr ist, das im Scheitelpunkt des Krümmungsbogens mit einem sich senkrecht zur ebene des U's erstreckenden Schnellkupplungsteil (7) mit dem Auslaßventil ausgerüstet ist, das an den freien Schenkeln des U's mit sich senkrecht zur Ebene des U's erstreckenden Füßen (6), die sich auf den Rand des Sammelbehälters (2) stützen, ausgerüstet ist und das mit mindestens zwei sich senkrecht zur Ebene des U's - jedoch in die den Füßen und dem Auslaßschnellkupplungsteil (7) entgegengesetzte Richtung - erstreckenden Schnellkupplungsteilen (4) mit Einlaßventilen ausgerüstet ist.

## Claims

1. A device for collecting a liquid, particularly for collecting waste oil, used brake fluid and the like from motor vehicles, consisting of at least two vessels (1, 2) which can be connected to each other by means of a rapid-action coupling (3, 4, 7, 10), at least one of which vessels serves as a removal vessel (1) which is equipped with a filling aperture at the top to which a flexible tube (14) is attached, with an outlet aperture disposed in its base, which outlet aperture is formed from the outlet part (3) of the rapid-action coupling and which has an outlet valve which is open in the coupled state but which is otherwise closed, and with feet (21) which protect the rapid-coupling component (3) from contamination when the removal vessel (1) is set down, and the other vessel of which serves as a collecting vessel (2) which is equipped with a filling aperture which is formed from the second (inlet) part (10) of the rapid-action coupling and which has an inlet valve which is open in the coupled state but is otherwise closed, with a separate air vent device (11) and optionally (when there is more than one removal vessel) with a connection element (5).

2. A device according to claim 1, characterised in that the collecting vessel (2) is a barrel with two bung-holes (8, 9).

3. A device according to claim 2, characterised in that both the inlet rapid-action coupling part (10) and the air vent device (11) are detachably secured in the bung-holes.

4. A device according to claim 3, characterised in that both the inlet rapid-coupling part (10) and the air vent device (11) are secured by means of sealing caps (12, 13) after their attachment.

5. A device according to claim 2, characterised in that a means (17) for hanging up the removal vessel (1) - on a wall or on part of the motor vehicle for example - is provided on a handle (16) of the removal vessel (1).

6. A device according to claim 5, characterised in that the means (17) at the same time serves as a holding device (18) for the free end (19) of the flexible tube when not in use.

7. A device according to any one of claims 1 to 6, characterised in that the means (17) is a wire strap.

8. A device according to any one of claims 1 to 7, characterised in that the vessels (1, 2) are made from semi-transparent material.

9. A device according to claim 1, characterised in that the connection element (5) is a substantially U-shaped tube, which is equipped at the summit of its curved arc with a rapid coupling part (7) extending perpendicularly to the plane of the U and bearing the outlet valve, which connection element is equipped at the free limbs of the U with feet (6) extending perpendicularly to the plane of the U and supported on the edge of the collecting vessel (2), and which is equipped with at least two rapid-coupling parts (4) with inlet valves, which rapid coupling parts extend perpendicularly to the plane of the U, but in the opposite direction to the feet and to the outlet rapid coupling part (7).

## Revendications

1. Dispositif pour la récupération d'un liquide, notamment pour collecter de l'huile usagée, du liquide de frein usagé et analogue de véhicules automobiles, constitué d'au moins deux récipients (1, 2) connectables par un raccord rapide (3, 4, 7, 10), dont au moins l'un sert de récipient de prélèvement (1), qui est équipé d'un orifice de remplissage en haut, sur lequel est fixé un tuyau souple (14), avec un orifice d'évacuation dans le fond, qui est constitué de la pièce d'évacuation (3) de l'accouplement rapide et d'une vanne d'évacuation ouverte à l'état raccordé, sinon fermée, et avec des pieds (21), qui protègent la pièce de raccord rapide (3) contre les salissures quand on dépose le récipient de prélèvement (1) , et dont l'autre sert de réservoir de récupération (2), avec un orifice d'entréè qui est formé de la deuxième pièce d'introduction (10) du raccord rapide et présente une vanne d'entrée ouverte à l'état raccordé, sinon fermée, un dispositif d'évent (11) séparé et qui le cas échéant (quand il y a plus d'un récipient de prélèvement) est équipé d'un élément de connexion (5).

2. Dispositif selon la revendication 1, caractérisé en ce que le récipient de récupération (2) est un fût avec deux bondes (8, 9).

3. Dispositif selon la revendication 2, caractérisé en ce qu'aussi bien la pièce de raccord rapide d'entrée (10) que le dispositif d'évent (11) sont montés de façon amovible dans les bandes.

4. Dispositif selon la revendication 3, caractérisé en ce qu'aussi bien la pièce de raccord rapide d'entrée (10) que le dispositif d'évent (11) sont assurés par des capuchons d'inviolabilité (12, 13) après leur fixation.

5. Dispositif selon la revendication 2, caractérisé en ce que sur une poignée (16) du récipient de prélèvement (1) se trouve un dispositif (17) pour accrocher le récipient de prélèvement (1), par exemple à une paroi ou à une pièce d'un véhicule.

6. Dispositif selon la revendication 5, caractérisé en ce que le dispositif (17) sert simultanément de support (18) de l'extrémité libre (19) du tuyau souple à l'état non utilisé.

7. Dispositif selon l'une des revendications 1 à 6, caractérisé en ce que le dispositif (17) est une équerre en fil.

8. Dispositif selon l'une des revendications 1 à 7, caractérisé en ce que le récipient (1, 2) est en matériau translucide.

9. Dispositif selon la revendication 1, caractérisé en ce que l'élément de connexion (5) est essentiellement un tube en forme de U, qui est équipé au sommet de l'arc de courbure d'une pièce de raccord rapide (7) s'étendant perpendiculairement au plan du U avec la vanne d'évacuation, équipé sur les pattes libres du U, de pieds (6) s'étendant perpendiculairement au plan du U, s'appuyant au bord du réservoir de récupération (2), équipé d'au moins deux pièces de raccord rapide (4) avec vanne d'entrée, s'étendant perpendiculairement au plan du U - du côté opposé aux pieds et à la pièce d'évacuation à accouplement rapide (7).
